# EUROPÄISCHE PATENTSCHRIFT

(11) **EP 3 036 085 B1**
(45) Veröffentlichungstag und Bekanntmachung des Hinweises auf die Patenterteilung: **04.10.2017**
(21) Anmeldenummer: 14761283.2
(22) Anmeldetag: 22.08.2014
(51) Int. Cl.: B29C 67/00, B22F 3/105, B29C 35/00

(54) **VORRICHTUNG ZUM HERSTELLEN DREIDIMENSIONALER OBJEKTE**
DEVICE FOR PRODUCING THREE-DIMENSIONAL OBJECTS
DISPOSITIF DE FABRICATION D'OBJETS TRIDIMENSIONNELS

(30) Priorität: 23.08.2013 DE 102013109162
(43) Veröffentlichungstag der Anmeldung: 29.06.2016
(73) Patentinhaber: FIT AG, 92331 Lupburg (DE)
(72) Erfinder: FRUTH, Carl, 92331 Parsberg (DE)
(74) Vertreter: Schneider, Andreas
(86) Internationale Anmeldenummer: PCT/EP2014/002306
(87) Internationale Veröffentlichungsnummer: WO 2015/024670

(56) Entgegenhaltungen:
- EP-A1- 1 674 192
- WO-A1-2006/125507

## Beschreibung

Die Erfindung betrifft eine Vorrichtung sowie ein Verfahren zum Herstellen dreidimensionaler Objekte durch selektives Verfestigen eines schichtweise aufgebrachten Aufbaumaterials.

Aus dem Stand der Technik sind Vorrichtungen und Verfahren zur Herstellung dreidimensionaler Objekte durch selektives Verfestigen eines schichtweise aufgetragenen Aufbaumaterials in großer Zahl bekannt. Zu nennen sind hier beispielsweise das Lasersintern oder das Selektive Maskensintern. Anlagen, mit denen ein solches Schichtbauverfahren durchgeführt wird, werden auch als Rapid Prototyping-Systeme bezeichnet. Diese Schichtbauverfahren dienen zur Herstellung von schichtweise aufgebauten Bauteilen aus verfestigbarem Material, wie Harz, Kunststoff, Metall oder Keramik, und werden beispielsweise zur Fertigung von technischen Prototypen verwendet. Dabei können mit Hilfe einer additiven Fertigungsmethode dreidimensionale Objekte direkt aus CAD-Daten hergestellt werden.

Bei einem solchen Schichtbauverfahren erfolgt der Aufbau der Objekte schichtweise, d. h. es werden Schichten eines Aufbaumaterials sukzessive übereinander aufgetragen. Vor dem Aufbringen der jeweils nächsten Schichten werden die dem zu fertigenden Objekt entsprechenden Stellen in den jeweiligen Schichten selektiv verfestigt. Das Verfestigen erfolgt beispielsweise durch lokales Erhitzen eines zumeist pulverförmigen Schichtrohmaterials mit Hilfe einer Strahlungsquelle. Indem gezielt Strahlung in geeigneter Weise in die gewünschten Bereiche eingebracht wird, kann eine exakt definierte, beliebig geartete Objektstruktur erzeugt werden. Dabei ist auch die Schichtdicke einstellbar. Ein solches Verfahren ist insbesondere zur Herstellung von dreidimensionalen Körpern verwendbar, indem mehrere dünne, individuell gestaltete Schichten aufeinanderfolgend erzeugt werden.

Typischerweise wird das zu verfestigende Aufbaumaterial auf eine Temperatur vorgewärmt, die unterhalb der Verarbeitungstemperatur liegt. Mit Hilfe eines zusätzlichen Energieeintrags wird anschließend die Verarbeitungstemperatur erreicht.

Beispielsweise wird ein Kunststoffmaterial bei einem Lasersinterprozeß auf eine Temperatur unterhalb der Sintertemperatur vorgewärmt. Die durch den Laser eingebrachte Energie trägt dann lediglich die Differenzwärmemenge zum Aufschmelzen der Pulverteilchen bei.

Das Vorwärmen erfolgt in vielen Fällen über ein Erwärmen der Aufbauplattform. Mit ansteigender Bauteilhöhe nimmt bei einem solchen Vorwärmen "von unten" jedoch der Wärmestrom der Vorwärmung durch Verluste und zunehmendes Volumen der Pulverschüttung ab.

Auch andere Verfahren führen zu einer unerwünschten unregelmäßigen Temperaturverteilung in dem Aufbaumaterial. Dies trifft insbesondere auch auf solche Verfahren zu, bei denen das Vorwärmen über eine Wärmezufuhr "von oben" erfolgt. Dabei werden zeitweise beheizbare Einrichtungen über der Aufbauschicht plaziert. Durch komplizierte Steuerungen der Heizkurve und andere aufwendige Maßnahmen wird versucht, eine gleichmäßige Temperaturverteilung in dem vorzuwärmenden Aufbaumaterial zu erreichen.

Aus WO 2006/125507 A1 ist eine Vorrichtung zum Herstellen dreidimensionaler Objekte durch selektives Verfestigen eines schichtweise aufgebrachten Aufbaumaterials bekannt, bei der auf einer in einer x-y-Ebene angeordneten Aufbauplattform ein dreidimensionales Objekt schichtweise erzeugt wird. Dabei ist ein Heizelement zum Eintragen von Wärmeenergie in das Aufbaumaterial vorgesehen und es gibt eine Antriebseinrichtung zum Erzeugen einer Relativbewegung zwischen der Aufbauplattform und dem Heizelement, nämlich einen Vertikalantrieb zum Anheben bzw. Absenken der Aufbauplattform.

Eine Aufgabe der vorliegenden Erfindung ist es, den Herstellungsprozeß zu verbessern, insbesondere den Wärmeeintrag zu optimieren.

Diese Aufgabe wird durch eine Vorrichtung nach Anspruch 1 bzw. durch ein Verfahren nach Anspruch 6 gelöst. Vorteilhafte Ausführungen der Erfindung sind in den Unteransprüchen angegeben. Die im Folgenden im Zusammenhang mit der Vorrichtung erläuterten Vorteile und Ausgestaltungen gelten sinngemäß auch für das erfindungsgemäße Verfahren und umgekehrt.

Die Erfindung schlägt vor, die aus dem Stand der Technik bekannte Vorgehensweise einer getakteten Herstellung, bei der innerhalb eines Taktes nach einem Materialauftrag zunächst ein Vorwärmen und anschließend ein selektives Verfestigen erfolgt, bevor in einem sich anschließenden neuen Takt erneut ein Materialauftrag vorgenommen wird, nicht mehr weiterzuverfolgen. Statt dessen schlägt die Erfindung einen kontinuierlichen Herstellungsprozeß vor, bei dem das Aufbringen des Aufbaumaterials, das Vorwärmen und das selektive Verfestigen durch lokales Erhitzen des Aufbaumaterials gleichzeitig erfolgt, und zwar an unterschiedlichen Stellen ein und desselben herzustellenden Objektes bzw. auch an mehreren Objekten gleichzeitig, sofern mehrere Objekte auf der Aufbauplattform hergestellt werden.

Die erfindungsgemäße Vorrichtung umfaßt eine in einer x-y-Ebene angeordnete Aufbauplattform, auf der wenigstens ein dreidimensionales Objekt schichtweise erzeugt wird, ein die Aufbauplattform zumindest teilweise überdeckendes Heizelement zum Eintragen von Wärmeenergie in das Aufbaumaterial sowie wenigstens eine Strahlungsquelle zum selektiven Verfestigen von Aufbaumaterial durch lokales Erhitzen. Das Heizelement weist wenigstens zwei gleichzeitig verwendbare Funktionsöffnungen auf, wobei eine der wenigstens zwei Funktionsöffnungen als Materialdurchlaß und eine andere der wenigstens zwei Funktionsöffnungen als Strahlungsdurchlaß ausgebildet ist. Erfindungsgemäß umfaßt die Vorrichtung eine Anzahl Antriebseinrichtungen zum Erzeugen von unabhängigen voneinander steuerbaren Relativbewegungen in x- und/oder y-Richtung zwischen wenigstens zwei der drei folgenden Komponenten der Vorrichtung: der Aufbauplattform, dem Heizelement, der wenigstens einen Strahlungsquelle.

Entsprechend umfaßt das erfindungsgemäße Verfahren die Schritte: schichtweises Erzeugen des wenigstens einen dreidimensionalen Objektes auf einer in einer x-y-Ebene angeordneten Aufbauplattform, Eintragen von Wärmeenergie in das Aufbaumaterial mit Hilfe eines die Aufbauplattform zumindest teilweise überdeckenden Heizelements, lokales Erhitzen von Aufbaumaterial durch eine Strahlungsquelle zum Zweck des selektiven Verfestigens sowie gleichzeitiges Durchlassen von Aufbaumaterial und Strahlungsenergie durch das Heizelement unter Verwendung von wenigstens zwei Funktionsöffnungen. Erfindungsgemäß umfaßt das Verfahren mittels einer Anzahl Antriebseinrichtungen das Erzeugen unabhängig voneinander ansteuerbarer Relativbewegungen in x-und/oder y-Richtung zwischen wenigstens zwei der drei folgenden Komponenten der Vorrichtung: der Aufbauplattform, dem Heizelement, der wenigstens einen Strahlungsquelle.

Eine grundlegende Idee der Erfindung besteht in der Verwendung eines zum Vorwärmen des Aufbaumaterials dienenden Heizelementes, welches sich durch Funktionsöffnungen auszeichnet, die als Materialdurchlaß und Strahlungsdurchlaß, mithin also als Beschichtungsöffnung zum Aufbringen von Aufbaumaterial und als Belichtungsöffnung zum lokalen Erhitzen des Aufbaumaterials dienen. Wird ein solches Heizelement in geeigneter Weise relativ zu der Aufbauplattform bewegt, kann ein gleichzeitiges Aufbringen von Aufbaumaterial, Vorwärmen und selektives Verfestigen erfolgen und damit ein nicht getaktetes, ununterbrochenes Herstellen des wenigstens einen Objektes. Der Aufbau des Objektes bzw. der Objekte erfolgt mit anderen Worten kontinuierlich, wobei die Aufbaugeschwindigkeit durch die Relativbewegung zwischen Aufbauplattform und Heizelement bestimmt wird. Die geometrische Anordnung der sich in unterschiedlichen Herstellungsprozeßphasen befindenden Objektbereiche, insbesondere der Abstand dieser Objektbereiche zueinander, wird durch die Anordnung der Funktionsöffnungen in dem Heizelement bestimmt, insbesondere durch den Abstand dieser Funktionsöffnungen zueinander.

Beispielsweise kann in einem ersten Objektbereich das Aufbaumaterial in Form einer frisch aufgebrachten Pulverschüttung durch das Heizelement vorgewärmt werden, während in einem in Bewegungsrichtung hinter dem ersten Objektbereich angeordneten zweiten Objektbereich mit Hilfe von durch eine Belichtungsöffnung durchtretender Strahlungsenergie gerade eine Schicht n verfestigt wird. Zeitgleich erfolgt in einem dritten Objektbereich, der in Bewegungsrichtung hinter dem zweiten Objektbereich liegt, ein Nachheizen der dort kurz zuvor verfestigten Aufbauschicht n durch das Heizelement, während in einem hinter dem dritten Objektbereich liegenden vierten Objektbereich durch eine Beschichtungsöffnung hindurchgeführtes weiteres Aufbaumaterial für eine nächste Schicht n+1 auf die bereits vorhandene Schicht n aufgebracht wird. Die Objektbereiche können dabei Bereiche eines Objektes oder aber auch Bereiche unterschiedlicher Objekte sein, wenn mehrere Objekte auf der Aufbauplattform angeordnet sind.

Die Wärmezufuhr für das Vorwärmen erfolgt "von oben", wodurch die Nachteile einer Wärmezufuhr über die Aufbauplattform nicht auftreten. Zugleich erfolgt die Wärmezufuhr vorzugsweise nicht nur zeitweise, nämlich nicht nur dann, wenn sich das Heizelement wie im Stand der Technik für kurze Zeit oberhalb der Aufbauschicht befindet, sondern, ermöglicht durch die neuartige kontinuierliche Arbeitsweise, dauerhaft. Damit wird auf einfache Art und Weise eine Optimierung des Wärmeeintrags erreicht. Zugleich wird der Herstellungsprozeß insgesamt verbessert.

Durch das Erzeugen mehrerer Relativbewegungen zwischen den beteiligten Komponenten Aufbauplattform, Heizelement und Strahlungsquelle können die zeitlichen Einwirkungen der verschiedenen Prozeßbedingungen in den jeweiligen Verfahrensschritten auf einfache Weise und sehr flexibel aufeinander abgestimmt und optimiert werden. Dadurch ist der Herstellungsprozeß insgesamt weiter optimierbar.

Als besonders vorteilhaft hat sich eine Entkopplung der Bewegung des Strahlungsdurchlasses von der Bewegung der Strahlungsquelle erwiesen. Mit anderen Worten kann sich die Strahlungsquelle mit einer anderen Geschwindigkeit über die Aufbauplattform bzw. das sich darauf befindenden Aufbaumaterial bewegen als das Heizelement.

Insbesondere dann, wenn das Einbringen von Strahlungsenergie durch die Belichtungsöffnung erfolgt, ohne daß diese Öffnung vollständig ausgeleuchtet wird, sondern wenn statt dessen eine gezielte Bestrahlung des unterhalb dieser Öffnung angeordneten Aufbaumaterials innerhalb der Grenzen dieser Öffnung erfolgt, beispielsweise derart, daß ein Laser das Aufbaumaterial entlang einer definierten Bahnkurve erhitzt, läßt sich erfindungsgemäß die Strahlungsquelle unabhängig von der Bewegung des Heizelements und damit unabhängig von der Bewegung der Belichtungsöffnung in dem von dem Strahlungsdurchlaß bereitgestellten Öffnungsbereich so bewegen, daß die Strahlungsleistung besonders effizient eingebracht werden kann.

Dies wird in einer bevorzugten Ausführungsform der Erfindung dadurch verwirklicht, daß die Vorrichtung neben einer ersten Antriebseinrichtung zum Erzeugen einer ersten Relativbewegung zwischen der Aufbauplattform und dem Heizelement in x-und/oder y-Richtung eine zweite Antriebseinrichtung zum Erzeugen einer von der ersten Relativbewegung unabhängigen zweiten Relativbewegung zwischen der Strahlungsquelle und dem Heizelement in x- und/oder y-Richtung aufweist.

Zur weiteren Optimierung des Prozesses, insbesondere für ein besonders effizientes Einbringen der Strahlungsleistung, kann zusätzlich die Form, die Anordnung und/oder die Größe der Belichtungsöffnungen, insbesondere die Schlitzbreite in der Hauptbewegungsrichtung, beispielsweise der x-Richtung, an den jeweiligen Prozeß anpaßbar sein bzw. auch während des Herstellungsprozesses variiert werden. Damit kann beispielsweise erreicht werden, daß der sich jeweils unmittelbar unterhalb einer Belichtungsöffnung befindende, nicht von dem Heizelement erwärmte Bereich möglichst klein ist. Zur weiterführenden Optimierung kann die Geschwindigkeit einzelner Komponenten, insbesondere die Geschwindigkeit des Heizelements und damit der Belichtungsöffnungen und/oder die Geschwindigkeit der Strahlungsquelle(n) während des Herstellungsprozesses variiert werden, insbesondere aufeinander abgestimmt werden.

Darüber hinaus ermöglicht es die vorliegende Erfindung, sich von der Notwendigkeit einer gleichmäßigen Temperaturverteilung zu lösen. Da an unterschiedlichen Stellen das Herstellungsverfahren unterschiedlich weit fortgeschritten ist, können an unterschiedlichen Stellen unterschiedliche Temperaturen von Vorteil sein. So kann beispielsweise in einem Bereich eine Vorwärmtemperatur zum Vorbereiten des Aufbaumaterials auf die bevorstehende lokale Erhitzung vorteilhaft sein; in einem benachbarten Bereich kann hingegen eine Nachheiztemperatur vorliegen, wie sie zum Erreichen bestimmter Eigenschaften der bereits verfestigten Schicht vorteilhaft ist, beispielsweise um Verzug zu verhindern.

Da das Heizelement dauerhaft zur Verfügung steht, kann eine solche definierte ungleichmäßige Temperaturverteilung auf besonders einfache Weise verwirklicht werden. In einer vorteilhaften Ausführungsform der Erfindung weist das Heizelement mehrere unterschiedlich temperierbare Bereiche auf. Dies wird beispielsweise mit Hilfe mehrerer, voneinander unabhängig betreibbarer Heizmodule erreicht.

Auch kann eine zusätzliche Wärmequelle zur Bereitstellung von Wärmeenergie vorgesehen sein, insbesondere in Form einer oberhalb des Heizelements angeordneten Strahlungsquelle. In diesem Fall ist wenigstens eine der Funktionsöffnungen als Heizöffnung zum zusätzlichen Eintragen von Wärmeenergie ausgebildet. Dabei kann es sich bei der Heizöffnung um eine Funktionsöffnung handeln, die bereits eine andere Funktion ausübt; beispielsweise kann ein bereits als Belichtungsöffnung dienender Strahlungsdurchlaß zugleich als Heizöffnung dienen.

Für die Übertragung der Heizenergie auf das Aufbaumaterial besonders vorteilhaft hat sich eine Ausführungsform der Erfindung erwiesen, bei der das Heizelement im wesentlichen plattenförmig ausgebildet ist. Die Plattenform des Heizelements ermöglicht zugleich eine besonders einfache Ausführung der Funktionsöffnungen. Vorteilhafterweise sind Heizelement und Aufbauplattform dabei derart ausgeführt, daß sie sich möglichst großflächig, vorzugsweise vollständig, überdecken bzw. während der Herstellungsprozesses möglichst großflächig, vorzugsweise vollständig, in Überdeckung miteinander gebracht werden können.

In einer bevorzugten Ausführungsform der Erfindung ist das Heizelement oberhalb der Aufbauplattform angeordnet. In einer Variante ist das Heizelement dabei von der jeweils obersten Aufbauschicht beabstandet. Das Aufwärmen erfolgt durch Wärmestrahlung. In einer alternativen Variante berührt das Heizelement die oberste Aufbauschicht. Das Aufwärmen erfolgt dann durch Wärmeleitung.

Befindet sich die Aufbauplattform innerhalb einer im Betriebszustand geschlossenen Prozeßkammer, dann kann das Heizelement als Begrenzungswand der Prozeßkammer dienen. Mit anderen Worten wird in diesem Fall die Prozeßkammer durch das Heizelement abgeschlossen. Das Heizelement ist dann ein Teil der Prozeßkammer.

Bei der Beschichtungsöffnung handelt es sich stets um eine tatsächliche Öffnung im Sinne eines Materialdurchbruchs. Für die Belichtungsöffnung muß das Heizelement hingegen nicht zwangsläufig durchbrochen sein. Die Belichtungsöffnung kann auch als ein Bereich geeigneten Materials in dem Grundkörper des Heizelements ausgeführt sein, das sich für einen Strahlungsdurchgang eignet.

In einer bevorzugten Ausführungsform der Erfindung erfolgt das Einbringen von Strahlungsenergie durch die Belichtungsöffnung, ohne daß diese Öffnung vollständig ausgeleuchtet wird. Statt dessen erfolgt eine gezielte Bestrahlung des unterhalb dieser Öffnung angeordneten Aufbaumaterials innerhalb der Grenzen dieser Öffnung. Die Strahlung kann dabei von einer oder mehreren Strahlungsquellen stammen. Beispielsweise können zum lokalen Erhitzen des Aufbaumaterials ein oder mehrere Laserstrahlen innerhalb des durch die Funktionsöffnung bereitgestellten Fensters eine lineare Hin- und Herbewegung innerhalb der Funktionsöffnung vollführen oder aber der oder die Laserstrahlen werden innerhalb des Fensters auf einer nichtlinearen Bahnkurve definiert geführt, jeweils in Abhängigkeit von der zu erzeugenden Struktur. Die Führung der Strahlung erfolgt mit Hilfe einer geeigneten Steuerung. Das zuvor auf eine Temperatur unterhalb der Verarbeitungstemperatur vorgewärmte Aufbaumaterial wird lokal weiter erhitzt. Mit Hilfe dieses zusätzlichen Energieeintrags wird die Verarbeitungstemperatur erreicht.

In einer besonders vorteilhaften Ausführungsform der Erfindung werden zum Energieeintrag mindestens zwei Strahlungsquellen verwendet, deren Strahlung gleichzeitig durch eine gemeinsame Belichtungsöffnung auf einen von dieser Belichtungsöffnung freigegebenen Bereich der darunterliegenden Aufbauschicht tritt. Durch die gleichzeitige Verwendung mehrerer Strahlungsquellen kann das Einbringen der Strahlungsenergie besonders effizient erfolgen. Zugleich ermöglicht dies, wie nachfolgend beschrieben, eine weitergehende Optimierung der Energiezufuhr.

In einer besonders vorteilhaften Ausführungsform der Erfindung ist es vorgesehen, daß jeder Strahlungsquelle ein von ihr zu bestrahlender Bereich der Aufbauschicht, nachfolgend als Zielbereich bezeichnet, zugeordnet ist. Dabei überlappen sich benachbarte Zielbereiche zumindest teilweise, wobei sie einen Überlappbereich bilden.

Mit anderen Worten werden die mindestens zwei gleichzeitig betriebenen Strahlungsquellen derart angesteuert, insbesondere derart in x- und/oder y-Richtung bewegt, daß sie Strahlungsenergie (auch) in wenigstens eine gemeinsame, d.h. von den mindestens zwei Strahlungsquellen bestrahlte Fläche der Aufbauschicht, den Überlappbereich, einbringen. Dabei bestrahlen die wenigstens zwei Strahlungsquellen den Überlappbereich entweder gleichzeitig oder nacheinander.

Die Ansteuerung der mindestens zwei Strahlungsquellen erfolgt dabei vorzugsweise derart, daß sich aus der Art und Weise der Überlappung der Strahlungsbereiche eine minimale Gesamtbearbeitungsdauer des Aufbaumaterials ergibt, genauer gesagt, daß diejenige Zeitdauer minimal ist, die für das Einbringen der für ein Verfestigen des Aufbaumaterials benötigten Energie erforderlich ist. Dadurch wird die Gesamtdauer der Herstellung der dreidimensionalen Objekte verkürzt. Vorzugsweise erfolgt die Ansteuerung zugleich derart, daß die Betriebszeiten der einzelnen Strahlungsquellen minimiert werden.

Zur Minimierung der Bearbeitungsdauer werden in einer bevorzugten Ausführungsform der Erfindung die zu belichtenden Flächen, die Zielbereiche, zunächst in einzelne Teilbereiche, nachfolgend als Flächensegmente bezeichnet, unterteilt oder es werden derartige Flächensegmente aus dem jeweiligen Zielbereich ausgewählt und auf diese Weise von Teilbereichen unterschieden, die nicht belichtet werden müssen. Beispielsweise wird der durch Form und Größe der Belichtungsöffnung vorgegebene, von mehreren Strahlungsquellen gleichzeitig bestrahlbare Bereich in x- und y-Richtung segmentiert.

Anschließend wird die benötigte Verweildauer der einzelnen Strahlungsquellen in dem jeweiligen Flächensegment berechnet. Abschließend wird eine geeignete, vorzugsweise die schnellste Belichtungsstrategie ermittelt. Dabei werden diejenigen Wege ermittelt, welche die einzelnen Strahlungsquellen innerhalb des von dem Strahlungsdurchlaß bereitgestellten Fensters zurücklegen. Der Energieeintrag erfolgt beispielsweise dadurch, daß ein Laserstrahl linienförmig, beispielsweise unter Bildung von eng benachbarten geradlinigen Schraffurlinien, eine zeilenweise Abtastung bzw. Rasterung des betreffenden Flächenbereiches vornimmt, um einen Bereich der Aufbauschicht zu verfestigen. Dieses Belichtungsmuster kann von Schicht zu Schicht variieren.

Vorzugsweise erfolgt nicht nur das Ermitteln der Belichtungsstrategie für eine bestimmte Segmentierung unter dem Gesichtpunkt einer zeitlichen Optimierung des Herstellungsprozesses, sondern auch das Segmentieren selbst wird so durchgeführt, daß die spätere Belichtung besonders effizient erfolgen kann. Beispielsweise erfolgt das Segmentieren unter Berücksichtigung der Lage der Bewegungsachsen der Strahlungsquellen.

Die erfindungsgemäße Vorrichtung zum Herstellen dreidimensionaler Objekte umfaßt geeignete Mittel zum Segmentieren, zum Berechnen der Verweildauer und zum Ermitteln der Belichtungsstrategie oder ist mit solchen Mitteln verbunden bzw. erhält entsprechende Informationen, insbesondere Steuerungsdaten zur Ansteuerung der Anzahl der Strahlungsquellen zur Verwirklichung der ermittelten Belichtungsstrategie aus einer externen Datenquelle.

Die zur Steuerung der erfindungsgemäßen Vorrichtung verwendeten Steuerungsdaten umfassen ein Datenmodell zur Beschreibung der herzustellenden Objekte bzw. werden unter Verwendung eines solchen Datenmodells erzeugt. Das Datenmodell beschreibt dabei nicht nur die Aufteilung jedes Objektes in Aufbauschichten, sondern auch die Lage der Objekte auf der Aufbauplattform.

Mit Hilfe der vorliegenden Erfindung ist es möglich, das der Herstellung der dreidimensionalen Objekte zugrundeliegende Datenmodell so zu optimieren, daß die Anordnung der Objekte auf der Aufbauplattform bzw. die Lage der Objekte zueinander so gewählt ist, daß unter Berücksichtigung der Belichtungsstrategie eine besonders effiziente Herstellung, insbesondere eine besonders schnelle Herstellung erfolgt. In einer besonders vorteilhaften Ausführungsform der Erfindung erfolgt also nicht nur eine optimale Wahl der jeweiligen individuellen Belichtungsstrategie pro Aufbauschicht, insbesondere eine zeitliche Optimierung des Strahlungseintrags, sondern auch bereits zuvor eine das erfindungsgemäße Verfahren berücksichtigende Optimierung der Anordnung der herzustellenden Objekte auf der Aufbauplattform.

In einer einfachen Variante der Erfindung sind Anordnung und Größe der Funktionsöffnungen unveränderlich. So hat es sich als vorteilhaft erwiesen, streifenförmige Funktionsöffnungen zu verwenden, die parallel zueinander liegen. Die Funktionsöffnungen sind dabei vorteilhafterweise senkrecht zu der Richtung der Relativbewegung, beispielsweise senkrecht zu der x- oder der y-Richtung, in dem Heizelement angeordnet. Alternativ ist es möglich, daß die Funktionsöffnungen schräg, d.h. unter einem Winkel zu der Bewegungsrichtung, angeordnet sind. Bei der vorliegenden Erfindung von Vorteil ist es, daß die Form, Anordnung und Größe der Funktionsöffnungen an die Besonderheiten des Verfahrens angepaßt werden können. So können anstelle von streifen- oder schlitzförmigen Funktionsöffnungen für alle oder einzelne Funktionen beispielsweise auch lochförmige Funktionsöffnungen oder Funktionsöffnungen beliebiger anderer Form vorgesehen sein.

In einer vorteilhaften Ausführungsform der Erfindung sind Form, Anordnung und/oder Größe der Funktionsöffnungen veränderbar. Beispielsweise kann es von Vorteil sein, die Größe der Belichtungsöffnung veränderbar auszuführen, insbesondere dann, wenn diese Funktionsöffnung als Blende dient, d. h. zur Begrenzung des Querschnitts der eingebrachten Strahlung. Ebenfalls kann es von Vorteil sein, die Größe der Beschichtungsöffnung veränderbar auszuführen, insbesondere dann, wenn Form und/oder Größe dieser Öffnung unmittelbar den Auftragsort bzw. das Volumen des je Zeiteinheit aufgebrachten Aufbaumaterials bestimmen. Eine Veränderung der Funktionsöffnungen kann insbesondere auch während der Laufzeit, also im laufenden Herstellungsprozeß erfolgen. Hierfür sind dann gegebenenfalls zusätzliche geeignete Antriebs- und Steuerungseinrichtungen vorgesehen.

Mit der vorliegenden Erfindung wird nicht nur der Wärmeeintrag in das Aufbaumaterial verbessert. Durch ein geeignetes Zusammenspiel der Anordnung und Größe der Funktionsöffnungen und der Relativbewegung zwischen Heizelement und Aufbauplattform sowie der Bereitstellung und/oder Führung der Strahlung zum lokalen Verfestigen des Aufbaumaterials kann der Herstellungsprozeß darüber hinaus auch besonders effizient durchgeführt werden.

Hierzu dient eine zentrale Steuerung des Herstellungsprozesses unter Verwendung eines Datenmodells zur Beschreibung des mit Hilfe des Schichtaufbauverfahrens herzustellenden Objektes. Die Steuerung umfaßt dabei alle relevanten Vorgänge des gleichzeitig an mehreren Stellen in unterschiedlichen Herstellungsphasen ablaufenden, d. h. unterschiedlich weit fortgeschrittenen Herstellungsprozesses. Mit anderen Worten erfolgt die Steuerung stets entsprechend dem tatsächlichen Fortgang des Herstellungsprozesses, wobei hierzu Sensordaten geeigneter Sensoren, insbesondere Temperatursensoren, verwendet werden. Die Steuerung umfaßt insbesondere die Steuerung der Heizung des Heizelements, hier gegebenenfalls die definierte Steuerung einzelner Temperaturbereiche. Die Steuerung umfaßt auch die Steuerung der Antriebseinrichtungen für die Relativbewegungen zwischen dem Heizelement, der Aufbauplattform und/oder der Strahlungsquelle(n), d.h. auch die Steuerung der geführten Strahlungsquelle(n) zum lokalen Erhitzen des Aufbaumaterials, und die Steuerung der Bereitstellungs- und/oder Aufbringeinrichtung zum Bereitstellen und/oder Aufbringen des Aufbaumaterials und gegebenenfalls die Steuerung der zusätzlichen Strahlungsquelle zur Temperierung des Aufbaumaterials, wie auch gegebenenfalls die Steuerung der in Anordnung und/oder Größe veränderbaren Funktionsöffnungen.

Alle im Zusammenhang mit der Steuerung der Schichtbauanlage bzw. der Durchführung des erfindungsgemäßen Verfahrens erforderlichen Rechenoperationen werden dabei durch eine oder mehrere Datenverarbeitungseinheiten ausgeführt, die zur Durchführung dieser Operationen ausgebildet sind. Jede dieser Datenverarbeitungseinheiten weist vorzugsweise eine Anzahl von Funktionsmodulen auf, wobei jedes Funktionsmodul ausgebildet ist zur Durchführung einer bestimmten Funktion oder einer Anzahl bestimmter Funktionen gemäß den beschriebenen Verfahren. Bei den Funktionsmodulen kann es sich um Hardwaremodule oder Softwaremodule handeln. Mit anderen Worten kann die Erfindung, soweit es die Datenverarbeitungseinheit betrifft, entweder in Form von Computerhardware oder in Form von Computersoftware oder in einer Kombination aus Hardware und Software verwirklicht werden. Soweit die Erfindung in Form von Software, also als Computerprogrammprodukt, verwirklicht ist, werden sämtliche beschriebenen Funktionen durch Computerprogrammanweisungen realisiert, wenn das Computerprogramm auf einem Rechner mit einem Prozessor ausgeführt wird. Die Computerprogrammanweisungen sind dabei auf an sich bekannte Art und Weise in einer beliebigen Programmiersprache verwirklicht und können dem Rechner in beliebiger Form bereitgestellt werden, beispielsweise in Form von Datenpaketen, die über ein Rechnernetz übertragen werden, oder in Form eines auf einer Diskette, einer CD-ROM oder einem anderen Datenträger gespeicherten Computerprogrammprodukts.

Ein Ausführungsbeispiel der Erfindung wird nachfolgend anhand der Zeichnungen näher erläutert. Hierbei zeigen:
- Fig. 1: eine schematische Darstellung einer erfindungsgemäßen Vorrichtung mit einer im Schnitt dargestellten, stark vereinfachten Prozeßkammer,
- Fig. 2: eine schematische Darstellung eines über einer Aufbauplattform angeordneten Heizelements in Draufsicht,
- Fig. 3: vereinfachte Schnittdarstellungen von Schichten des aufzubauenden Objektes in unterschiedlichen Herstellungsphasen,
- Fig. 4: eine Ausführungsform der Erfindung mit zwei Strahlungsquellen.

Sämtliche Figuren zeigen die Erfindung nicht maßstabsgerecht, dabei lediglich schematisch und nur mit ihren wesentlichen Bestandteilen. Gleiche Bezugszeichen entsprechen dabei Elementen gleicher oder vergleichbarer Funktion.

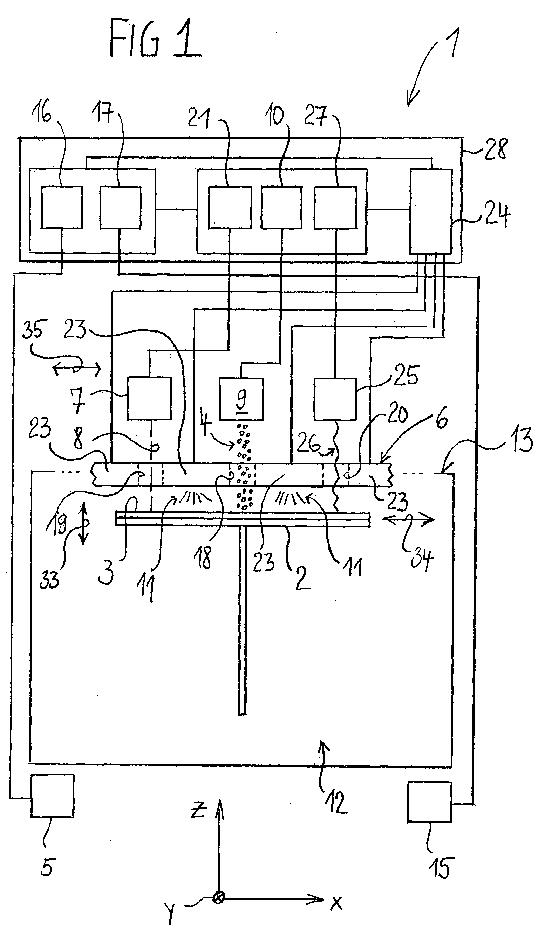

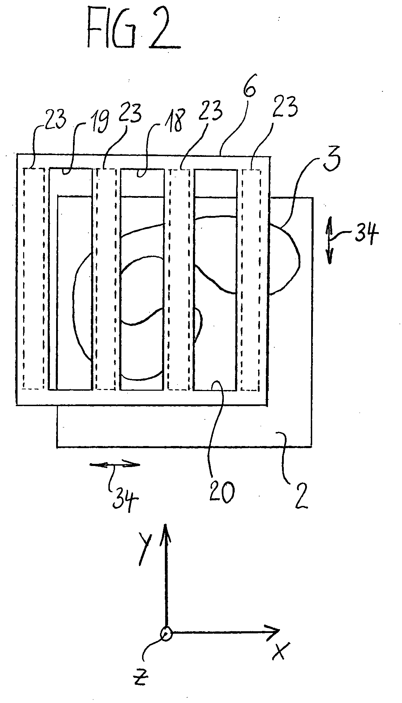

Anhand der Fig. 1 und 2 wird als Vorrichtung zum Herstellen wenigstens eines dreidimensionalen Objektes durch selektives Verfestigen eines schichtweise aufgebrachten Aufbaumaterials beispielhaft eine Vorrichtung 1 zum Lasersintern beschrieben.

Die Erfindung ist jedoch nicht auf dieses spezielle Verfahren beschränkt. Die Erfindung ist auch auf andere additive Fertigungsverfahren anwendbar, wie beispielsweise Laserschmelzen, Maskensintern, Drop on Powder / Drop-on-Bed, Stereolithographie und dergleichen.

Bei der Beschreibung der Erfindung kommt ein orthogonales Koordinatensystem (x, y, z) zur Anwendung.

Die Vorrichtung 1 zum Lasersintern umfaßt eine in einer x-y-Ebene angeordnete Aufbauplattform 2, auf der ein dreidimensionales Objekt 3 in bekannter Art und Weise schichtweise erzeugt wird. Bei dem Aufbaumaterial 4 handelt es sich um ein geeignetes Kunststoffpulver. Nach der Herstellung einer Schicht n wird zur Herstellung einer neuen Schicht n+1 die Aufbauplattform 2 mit den bereits erstellten und erhärteten Schichten um eine bestimmte Weglänge nach unten verfahren. Hierzu dient eine Antriebseinrichtung 5 zum Erzeugen einer Relativbewegung zwischen der Aufbauplattform 3 und einem später genauer beschriebenen Heizelement 6 in z-Richtung, d. h. senkrecht zu der Aufbauebene. Diese Bewegung in z-Richtung ist in Fig. 1 mit dem Pfeil 33 angedeutet. Bei der Antriebseinrichtung 5 handelt es sich beispielsweise um einen Elektromotor.

Zwischen dem Verfestigen einer Schicht n und dem Aufbringen von neuem Aufbaumaterial 4 für eine nachfolgende Schicht n+1 kann es vorgesehen sein, überschüssiges Aufbaumaterial 4 von der Aufbauplattform 2 zu entfernen. In diesem Fall ist eine hierfür geeignete Einrichtung (nicht abgebildet) vorgesehen, beispielsweise in Form eines Abstreifmessers oder dergleichen, welches vorteilhafterweise mit dem Heizelement 6 verbunden ist oder mit diesem zusammenwirkt.

Die Vorrichtung 1 umfaßt wenigstens eine Strahlungsquelle 7, die Strahlungsenergie zum lokalen Erhitzen von Aufbaumaterial 4 bereitstellt, um dieses selektiv zu verfestigen. Bei der wenigstens einen Strahlungsquelle 7 handelt es sich beispielsweise um einen Laser, der einen Laserstrahl 8 geführt abgibt.

Die Vorrichtung 1 umfaßt außerdem wenigstens eine Bereitstellungs- und/oder Aufbringeinrichtung 9, mit der Aufbaumaterial 4 bereitstellt und/oder auf die Aufbauplattform 2 oder eine bereits vorhandene Aufbauschicht aufgebracht wird. Bei der Bereitstellungs- und/oder Aufbringeinrichtung 9 handelt es sich beispielsweise um eine Einrichtung zum Aufbringen einer Pulverschüttung. Die Bereitstellungs- und/oder Aufbringeinrichtung 9 ist mit einer entsprechenden Steuerung 10 verbunden, die den Materialauftrag steuert.

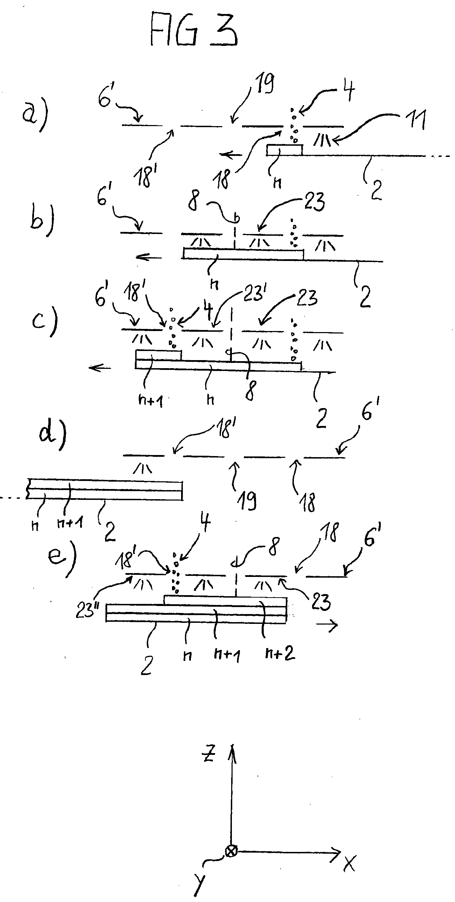

Die Vorrichtung 1 umfaßt weiter das oben bereits erwähnte, die Aufbauplattform 2 während der Herstellungsprozesses dauerhaft, zumindest teilweise überdeckende Heizelement 6 zum Eintragen von Wärmeenergie in das Aufbaumaterial 4. Das Heizelement 6 ist im wesentlichen plattenförmig ausgebildet. Es ist oberhalb der Aufbauplattform 2 angeordnet, wobei es von der jeweils obersten Aufbauschicht beabstandet ist. Der Abstand beträgt typischerweise zwischen 100 µm und 10 mm. Das Aufwärmen des Aufbaumaterials 4 erfolgt durch von dem Heizelement 6 abgegebene Wärmestrahlung 11, wie sie in den Fig. 1 und 3 symbolisch dargestellt ist.

Die Aufbauplattform 2 befindet sich innerhalb einer im Betriebszustand geschlossenen Prozeßkammer 12, die in Fig. 1 nur schematisch angedeutet ist. Das Heizelement 6 dient dabei als Begrenzungswand der Prozeßkammer 12. Genauer gesagt ist das Heizelement 6 als Teil der oberen Abdeckung 13 der Prozeßkammer 12 ausgeführt.

Die Vorrichtung 1 umfaßt zudem eine Antriebseinrichtung 15 zum Erzeugen einer Relativbewegung zwischen der Aufbauplattform 2 und dem Heizelement 6 in x- und/oder y-Richtung, d. h. in einer Schichtrichtung. Diese Bewegung in x- und/oder y-Richtung ist in Fig. 1 mit dem Pfeil 34 angedeutet. Bei der Antriebseinrichtung 15 handelt es sich beispielsweise um einen Elektromotor. Beide Antriebseinrichtungen 5, 15 sind mit entsprechenden Antriebssteuerungen 16, 17 verbunden.

In dem hier beschriebenen Ausführungsbeispiel bewegt die Antriebseinrichtung 15 die Aufbauplattform 2 relativ zu dem feststehenden Heizelement 6. Die Hauptbewegungsrichtung ist die x-Richtung. Im einfachsten Fall beschränkt sich die Bewegung der Aufbauplattform 2 auf diese Hauptbewegungsrichtung. Falls für den Herstellungsprozeß erforderlich oder vorteilhaft, kann die Bewegung in x-Richtung von einer Bewegung der Aufbauplattform 2 in y-Richtung überlagert werden.

Das Heizelement 6 weist wenigstens zwei, in dem in Fig. 1 dargestellten Beispiel drei gleichzeitig verwendbare, voneinander beabstandete Funktionsöffnungen 18, 19, 20 auf. Die Funktionsöffnungen 18, 19, 20 sind schlitz- bzw. streifenförmig, langgestreckt rechteckig, liegen parallel zueinander und senkrecht zu der Hauptbewegungsrichtung, hier der x-Richtung. Eine der Funktionsöffnungen ist als Materialdurchlaß 18 und eine andere der Funktionsöffnungen als Strahlungsdurchlaß 19 ausgebildet. Während des Erzeugens des Objektes 3 wird gleichzeitig sowohl Aufbaumaterial 4 als auch Strahlungsenergie, hier in Form des Laserstrahls 8, durch die Funktionsöffnungen 18, 19 hindurchgelassen.

Anders ausgedrückt ist die eine Funktionsöffnung als Beschichtungsöffnung 18 zum Aufbringen von Aufbaumaterial 4 auf die Aufbauplattform 2 oder eine bereits vorhandene Aufbauschicht ausgebildet und die andere Funktionsöffnung ist als Belichtungsöffnung 19 zum gleichzeitigen Einbringen von Strahlungsenergie der wenigstens einen Strahlungsquelle 7 in das aufgebrachte Aufbaumaterial 4 zum Verfestigen des Aufbaumaterials 4 ausgebildet.

Das Einbringen von Strahlungsenergie zum lokalen Erhitzen des Aufbaumaterials 4 erfolgt, indem der Laserstrahl 8 durch die Belichtungsöffnung 19 hindurch auf einer definierten Bahn geführt wird. Die Führung des Laserstrahls 8 erfolgt mit Hilfe einer geeigneten Antriebs- und Steuerungseinrichtung 21. Mit anderen Worten wird nicht nur die erste Antriebseinrichtung 15 zum Erzeugen einer Relativbewegung zwischen der Aufbauplattform 2 und dem Heizelement 6 in x-und/oder y-Richtung, sondern auch eine zweite Antriebseinrichtung 21 zum Erzeugen einer von dieser ersten Relativbewegung unabhängigen zweiten Relativbewegung zwischen der Strahlungsquelle 7 und dem Heizelement 6 in x- und/oder y-Richtung verwendet. In dem illustrierten Beispiel dient die zweite Antriebseinrichtung 21 zur Bewegung der Strahlungsquelle 7. Diese Bewegung der Strahlungsquelle 7 in x- und/oder y-Richtung ist in Fig. 1 mit dem Pfeil 35 angedeutet.

Statt eines feststehenden Heizelements 6 mit demgegenüber beweglicher Aufbauplattform und beweglicher Strahlungsquelle 7 kann in alternativen Ausführungen (nicht abgebildet) auch die Aufbauplattform in der x-y-Ebene feststehend sein, wobei in diesem Fall Heizelement 6 und Strahlungsquelle 7 zueinander bewegbar ausgeführt sind. Alternativ kann auch eine feststehende Strahlungsquelle 7 mit einem sich bewegenden Heizelement 6 und einer sich bewegenden Aufbauplattform 2 kombiniert sein, um die beiden gewünschten Relativbewegungen bereitzustellen.

Das Heizelement 6 weist mehrere, voneinander unabhängig ansteuerbare Heizmodule 23 auf, die zwischen bzw. neben den Funktionsöffnungen 18, 19, 20 angeordnet sind. Alle Heizmodule 23 des Heizelements 6 sind mit einer Heizungssteuerung 24 verbunden. Das Arbeitsprinzip der Heizmodule 23 beruht beispielsweise auf dem Prinzip der elektrischen Induktion. Geeignete andere Funktionsweisen der Heizmodule sind ebenfalls möglich.

Die Vorrichtung 1 umfaßt in dem in Fig. 1 illustrierten Beispiel auch eine zusätzliche Wärmequelle in Form einer oberhalb des Heizelements 6 angeordneten Strahlungsquelle 25 zur Bereitstellung von Wärmeenergie. Bei dieser zusätzlichen Strahlungsquelle 25 handelt es sich beispielsweise um einen Infrarotstrahler, der Infrarotstrahlung 26 abgibt. Für diese Strahlungsquelle 25 ist ebenfalls eine geeignete Steuerung 27 vorgesehen. Dieser zusätzlichen Strahlungsquelle 25 ist eine eigene Funktionsöffnung 20 zugewiesen, die somit als Heizöffnung dient.

Eine zentrale Steuerung 28 ist für den kontrollierten Ablauf des Herstellungsverfahrens verantwortlich. Die Steuerung 28 umfaßt hierfür alle relevanten Teilsteuerungen 10, 16, 17, 21, 24, 27.

Anhand der Fig. 3 werden nachfolgend verschiedene Phasen der Herstellung beschrieben. Dabei kommt ein von dem in den Fig. 1 und 2 gezeigten Heizelement 6 verschiedenes Heizelement 6' zur Anwendung, welches über drei Funktionsöffnungen verfügt, nämlich über zwei Beschichtungsöffnungen 18, 18' und eine zwischen den Beschichtungsöffnungen 18, 18' angeordnete Belichtungsöffnung 19.

In Fig. 3a bewegt sich die Aufbauplattform 2, angetrieben von der Antriebseinrichtung 15, in x-Richtung unter der ersten Beschichtungsöffnung 18 des Heizelements 6 hindurch. Es wird Aufbaumaterial 4 für eine Schicht n auf die Aufbauplattform 2 aufgebracht.

In Fig. 3b bewegt sich die Aufbauplattform 2 in x-Richtung weiter. Das kurz zuvor aufgebrachte Aufbaumaterial 4 wird durch ein zwischen der ersten Beschichtungsöffnung 18 und der Belichtungsöffnung 19 in dem Grundkörper des Heizelements 6 angeordnetes Heizmodul 23 auf eine Temperatur unterhalb der Sintertemperatur vorgewärmt. Gleichzeitig erfolgt in einen benachbarten, kurz zuvor vorgewärmten Objektbereich ein Einbringen zusätzlicher Wärmeenergie mit Hilfe des Laserstrahls 8 durch die Belichtungsöffnung 19, wodurch die Pulverteilchen aufschmelzen.

In Fig. 3c bewegt sich die Aufbauplattform 2 in x-Richtung weiter. Bevor die Aufbauplattform 2 die zweite Beschichtungsöffnung 18' erreicht, wird sie, angetrieben von der Antriebseinrichtung 5, in z-Richtung eine erforderliche Wegstrecke nach unten bewegt. Durch die zweite Beschichtungsöffnung 18' wird Aufbaumaterial 4 für eine weitere Schicht n+1 aufgebracht. Kurz zuvor wurde dieser Objektbereich durch ein zwischen der Belichtungsöffnung 19 und der zweiten Beschichtungsöffnung 18' angeordneten weiteres Heizmodul 23' erneut erwärmt.

In Fig. 3d hat die Aufbauplattform 2 ihren einen Umkehrpunkt erreicht. Die Schichten n und n+1 wurden erzeugt. Da keine Belichtungsöffnung 19 mehr über der Aufbauplattform 2 angeordnet ist, findet in diesem Augenblick keine Laserbestrahlung mehr statt. Auch das Aufbringen von Aufbaumaterial 4 erfolgt nur solange, wie wenigstens eine der beiden Beschichtungsöffnungen 18, 18' über der Aufbauplattform 2 angeordnet ist.

In Fig. 3e bewegt sich die Aufbauplattform 2 in x-Richtung, entgegengesetzt zu der ersten Bewegung, unter dem Heizelement 6 hindurch. Mit Hilfe der zweiten Beschichtungsöffnung 18' ist bereits ein neuer Materialauftrag für die nächste Schicht n+2 erfolgt, ebenso wie ein Vorwärmen mit Hilfe eines dritten Heizmoduls 23". Zuvor wurde die Aufbauplattform 2, angetrieben von der Antriebseinrichtung 5, erneut eine erforderliche Wegstrecke in z-Richtung nach unten bewegt. Durch die Belichtungsöffnung 19 erfolgt eine lokale Bestrahlung mit dem Laserstrahl 8 zum Verfestigen der zu erzeugenden Struktur. Das erste Heizmodul 23 dient zum Nachheizen. Bei einer weiteren Bewegung der Aufbauplattform 2 wird in Kürze durch die erste Beschichtungsöffnung 18 ein Materialauftrag für die Schicht n+3 erfolgen.

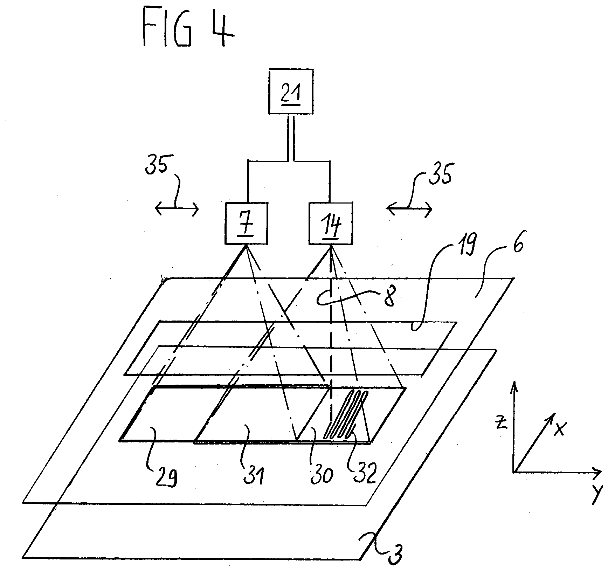

In Fig. 4 ist ein Ausführungsbeispiel illustriert, bei dem die Strahlung 8 von zwei zeitgleich betriebenen Strahlungsquellen 7, 14 durch eine gemeinsame Belichtungsöffnung 19 auf die von dieser Belichtungsöffnung 19 freigegebene Aufbauschicht 3 auftrifft. Aus Gründen der Übersichtlichkeit ist das Heizelement 6 transparent dargestellt, zudem ist nur eine einzige Funktionsöffnung, die Belichtungsöffnung 19, abgebildet. Jeder Strahlungsquelle 7, 14 ist ein Zielbereich 29, 30 zugeordnet, wobei diese Zuordnung symbolisch mit durchbrochenen Hilfslinien dargestellt wird. Die beiden Zielbereiche 29, 30 überschneiden sich unter Ausbildung eines Überlappbereiches 31. Die Ansteuerung der mindestens zwei Strahlungsquellen 7, 14 bei denen es sich wieder um Laser handeln kann, erfolgt durch eine entsprechend ausgebildete Antriebs- und Steuereinrichtung 21 derart, daß sich eine minimale Gesamtbearbeitungsdauer des Aufbaumaterials ergibt. Zur Verwirklichung einer optimalen Belichtungsstruktur bewegt sich jede Strahlungsquelle 7, 14 auf einer definierten Bahn 32 in x- und/oder y-Richtung, wie für die Strahlungsquelle 14 in Fig. 4 angedeutet.

Zusammenfassend betrifft die Erfindung eine Vorrichtung 1 zum Herstellen dreidimensionaler Objekte 3 durch selektives Verfestigen eines schichtweise aufgebrachten Aufbaumaterials 4, mit einer in einer x-y-Ebene angeordneten Aufbauplattform 2, auf der wenigstens ein dreidimensionales Objekt 3 schichtweise erzeugt wird, mit einem die Aufbauplattform 2 zumindest teilweise überdeckenden Heizelement 6 zum Eintragen von Wärmeenergie 11 in das Aufbaumaterial 4, mit wenigstens einer Strahlungsquelle zum selektiven Verfestigen von Aufbaumaterial durch lokales Erhitzen, wobei das Heizelement 6 wenigstens zwei gleichzeitig verwendbare Funktionsöffnungen 18, 19 aufweist, wobei eine der wenigstens zwei Funktionsöffnungen als Materialdurchlaß 18 und eine andere der wenigstens zwei Funktionsöffnungen als Strahlungsdurchlaß 19 ausgebildet ist. Diese Vorrichtung 1 umfaßt erfindungsgemäß eine Anzahl Antriebseinrichtungen 15, 21 zum Erzeugen von voneinander unabhängigen Relativbewegungen in x-und/oder y-Richtung zwischen wenigstens zwei der drei folgenden Komponenten: der Aufbauplattform 2, dem Heizelement 6, der wenigstens einen Strahlungsquelle 7, 14.

Vorteilhafterweise umfaßt die Vorrichtung 1 eine erste Antriebseinrichtung 15 zum Erzeugen einer Relativbewegung zwischen der Aufbauplattform 2 und dem Heizelement 6 in x-und/oder y-Richtung und eine zweite Antriebseinrichtung 21 zum Erzeugen einer Relativbewegung zwischen der wenigstens einen Strahlungsquelle 7, 14 und dem Heizelement 6 in x-und/oder y-Richtung. Vorteilhafterweise umfaßt die Vorrichtung 1 wenigstens zwei gleichzeitig betreibbaren Strahlungsquellen 7, 14 und einer Steuerung 21 zur Ansteuerung dieser Strahlungsquellen 7, 14 derart, daß sich deren Strahlungsbereiche 29, 30 überlappen.

Vorteilhafterweise überdeckt das Heizelement 6 die Aufbauplattform 2 dauerhaft zumindest teilweise. Vorteilhafterweise können das Heizelement 6 und die Aufbauplattform 2 vollständig in Überdeckung miteinander gebracht werden. Vorteilhafterweise ist das Heizelement 6 im wesentlichen plattenförmig ausgebildet. Vorteilhafterweise ist das Heizelement 6 oberhalb der Aufbauplattform 2 angeordnet; dabei ist es entweder von der obersten Aufbauschicht beabstandet oder aber es berührt die oberste Aufbauschicht. Vorteilhafterweise befindet sich die Aufbauplattform 2 innerhalb einer im Betriebszustand geschlossenen Prozeßkammer 12 und das Heizelement 6 dient als Begrenzungswand der Prozeßkammer 12. Vorteilhafterweise weist das Heizelement 6 unterschiedlich temperierbare Bereiche auf. Vorteilhafterweise ist Form, Anordnung und/oder Größe der Funktionsöffnungen 18, 19, 20 veränderbar. Vorteilhafterweise ist die Geschwindigkeit des Heizelements 6 und/oder die Geschwindigkeit der wenigstens einen Strahlungsquelle 7, 14 während des Herstellungsprozesses veränderbar.

Die Erfindung betrifft weiterhin ein Verfahren zum Herstellen dreidimensionaler Objekte 3 durch selektives Verfestigen eines schichtweise aufgebrachten Aufbaumaterials 4, wobei auf einer in einer x-y-Ebene angeordneten Aufbauplattform 2 wenigstens ein dreidimensionales Objekt 3 schichtweise erzeugt wird, wobei ein die Aufbauplattform 2 zumindest teilweise überdeckendes Heizelement 6 Wärmeenergie 11 in das Aufbaumaterial 4 einträgt, wobei wenigstens eine Strahlungsquelle Aufbaumaterial zum selektiven Verfestigen lokal erhitzt und wobei das Heizelement 6 unter Verwendung von wenigstens zwei Funktionsöffnungen 18, 19, 20 gleichzeitig Aufbaumaterial 4 und Strahlungsenergie 8 durchläßt. Das Verfahren umfaßt das Erzeugen voneinander unabhängiger Relativbewegungen in x- und/oder y-Richtung mittels einer Anzahl Antriebseinrichtungen 15, 21 zwischen wenigstens zwei der drei folgenden Komponenten: der Aufbauplattform 2, dem Heizelement 6, der wenigstens einen Strahlungsquelle 7, 14.

Alle in der Beschreibung, den nachfolgenden Ansprüchen und der Zeichnung dargestellten Merkmale können sowohl einzeln, als auch in beliebiger Kombination miteinander erfindungswesentlich sein.

### Bezugszeichenliste

- 1: Vorrichtung zum Lasersintern
- 2: Aufbauplattform
- 3: Objekt, Aufbauschicht
- 4: Aufbaumaterial
- 5: Antriebseinrichtung (z)
- 6: Heizelement
- 7: Strahlungsquelle, Laser
- 8: Laserstrahl
- 9: Bereitstellungs-/Aufbringeinrichtung
- 10: Steuerung des Materialauftrags
- 11: Wärmestrahlung
- 12: Prozeßkammer
- 13: Abdeckung
- 14: Strahlungsquelle, Laser
- 15: Antriebseinrichtung (x/y)
- 16: Antriebssteuerung (z)
- 17: Antriebssteuerung (x/y)
- 18: Funktionsöffnung, Materialdurchlaß, Beschichtungsöffnung
- 19: Funktionsöffnung, Strahlungsdurchlaß, Belichtungsöffnung
- 20: Funktionsöffnung, Heizöffnung
- 21: Antriebs- und Steuerungseinrichtung des Lasers
- 22: (frei)
- 23: Heizmodul
- 24: Heizungssteuerung
- 25: Strahlungsquelle, IR-Strahler
- 26: Infrarotstrahlung
- 27: Steuerung der Zusatzheizung
- 28: zentrale Steuerung
- 29: erster Zielbereich
- 30: zweiter Zielbereich
- 31: Überlappbereich
- 32: Bewegungsbahn
- 33: Bewegung des Heizelements in z-Richtung
- 34: Bewegung des Heizelements in x- und/oder y-Richtung
- 35: Bewegung der Strahlungsquelle in x- und/oder y-Richtung

## Patentansprüche

1. Vorrichtung (1) zum Herstellen dreidimensionaler Objekte (3) durch selektives Verfestigen eines schichtweise aufgebrachten Aufbaumaterials (4),
- mit einer in einer x-y-Ebene angeordneten Aufbauplattform (2), auf der wenigstens ein dreidimensionales Objekt (3) schichtweise erzeugt wird,
- mit einem die Aufbauplattform (2) zumindest teilweise überdeckenden Heizelement (6) zum Eintragen von Wärmeenergie (11) in das Aufbaumaterial (4),
- mit wenigstens einer Strahlungsquelle (7, 14) zum selektiven Verfestigen von Aufbaumaterial (4) durch lokales Erhitzen,
wobei das Heizelement (6) wenigstens zwei gleichzeitig verwendbare Funktionsöffnungen (18, 19) aufweist,
wobei eine der wenigstens zwei Funktionsöffnungen als Materialdurchlaß (18) und eine andere der wenigstens zwei Funktionsöffnungen als Strahlungsdurchlaß (19) ausgebildet ist,
- mit einer Anzahl Antriebseinrichtungen (15, 21) zum Erzeugen von Relativbewegungen in x- und/oder y-Richtung zwischen wenigstens zwei der drei folgenden Komponenten: der Aufbauplattform (2), dem Heizelement (6), der wenigstens einen Strahlungsquelle (7, 14).

2. Vorrichtung (1) nach Anspruch 1,
- mit einer ersten Antriebseinrichtung (15) zum Erzeugen einer Relativbewegung zwischen der Aufbauplattform (2) und dem Heizelement (6) in x- und/oder y-Richtung, und
- mit einer zweiten Antriebseinrichtung (21) zum Erzeugen einer Relativbewegung zwischen der wenigstens einen Strahlungsquelle (7, 14) und dem Heizelement (6) in x-und/oder y-Richtung.

3. Vorrichtung (1) nach Anspruch 1 oder 2, mit wenigstens zwei gleichzeitig betreibbaren Strahlungsquellen (7, 14) und einer Steuerung (21) zur Ansteuerung dieser Strahlungsquellen (7, 14) derart, daß sich deren Strahlungsbereiche (29, 30) überlappen.

4. Vorrichtung (1) nach einem der Ansprüche 1 bis 3, wobei die Form, Anordnung und/oder Größe der Funktionsöffnungen (18, 19, 20) veränderbar ist.

5. Vorrichtung (1) nach einem der Ansprüche 1 bis 4, wobei die Geschwindigkeit des Heizelements (6) und/oder die Geschwindigkeit der wenigstens einen Strahlungsquelle (7, 14) während des Herstellungsprozesses veränderbar ist.

6. Verfahren zum Herstellen dreidimensionaler Objekte (3) durch selektives Verfestigen eines schichtweise aufgebrachten Aufbaumaterials (4),
- wobei auf einer in einer x-y-Ebene angeordneten Aufbauplattform (2) wenigstens ein dreidimensionales Objekt (3) schichtweise erzeugt wird,
- wobei ein die Aufbauplattform (2) zumindest teilweise überdeckendes Heizelement (6) Wärmeenergie (11) in das Aufbaumaterial (4) einträgt,
- wobei wenigstens eine Strahlungsquelle (7, 14) Aufbaumaterial (4) zum selektiven Verfestigen lokal erhitzt,
- wobei das Heizelement (6) unter Verwendung von wenigstens zwei Funktionsöffnungen (18, 19, 20) gleichzeitig Aufbaumaterial (4) und Strahlungsenergie (8) durchläßt,
- wobei eine Anzahl Antriebseinrichtungen (15, 21) Relativbewegungen in x- und/oder y-Richtung zwischen wenigstens zwei der drei folgenden Komponenten erzeugt: der Aufbauplattform (2), dem Heizelement (6), der wenigstens einen Strahlungsquelle (7, 14).

## Claims

1. An apparatus (1) for manufacturing three-dimensional objects (3) by selective solidification of a build material (4) applied in layers,
- having a build platform (2), arranged in an X-Y plane, on which at least one three-dimensional object (3) is generated in layers,
- having a heating element (6), at least partly overlying the build platform (2), for inputting thermal energy (11) into the build material (4),
- having at least one radiation source (7, 14) for selective solidification of build material (4) by local heating,
the heating element (6) comprising at least two simultaneously usable functional openings (18, 19),
one of the at least two functional openings being embodied as a material passthrough (18) and another of the at least two functional openings being embodied as a radiation passthrough (19),
- having a number of drive devices (15, 21) for generating relative motions in an X and/or Y direction between at least two of the three following components: the build platform (2), the heating element (6), the at least one radiation source (7, 14).

2. The apparatus (1) according to Claim 1,
- having a first drive device (15) for generating a relative motion in an X and/or Y direction between the build platform (2) and the heating element (6), and
- having a second drive device (21) for generating a relative motion in an X and/or Y direction between the at least one radiation source (7, 14) and the heating element (6).

3. The apparatus (1) according to Claim 1 or 2, having at least two simultaneously operable radiation sources (7, 14) and a control system (21) for applying control to said radiation sources (7, 14) in such a way that their radiation regions (29, 30) overlap.

4. The apparatus (1) according to one of Claims 1 to 3, the shape, arrangement, and/or size of the functional openings (18, 19, 20) being modifiable.

5. The apparatus (1) according to one of Claims 1 to 4, the speed of the heating element (6) and/or the speed of the at least one radiation source (7, 14) being modifiable during the manufacturing process.

6. A method for manufacturing three-dimensional objects (3) by selective solidification of a build material (4) applied in layers,
- at least one three-dimensional object (3) being generated, in layers, on a build platform (2) arranged in an X-Y plane,
- a heating element (6) that at least partly overlies the build platform (2) inputting thermal energy (11) into the build material (4),
- at least one radiation source (7, 14) locally heating build material (4) for selective solidification,
- the heating element (6), using at least two functional openings (18, 19, 20), allowing build material (4) and radiation energy (8) to pass through simultaneously,
- a number of drive devices (15, 21) generating relative motions in an X and/or Y direction between at least two of the three following components: the build platform (2), the heating element (6), the at least one radiation source (7, 14).

## Revendications

1. Dispositif (1) de fabrication d'objets tridimensionnels (3) par solidification sélective d'un matériau de construction (4) appliqué en couches,
- avec une plate-forme de construction (2) disposée dans un plan x-y sur laquelle est produit en couches au moins un objet tridimensionnel (3),
- avec un élément chauffant (6) recouvrant au moins en partie la plate-forme de construction (2) pour apporter de l'énergie thermique (11) dans le matériau de construction (4),
- avec au moins une source de rayonnement (7, 14) pour la solidification sélective de matériau de construction (4) par chauffage local,
l'élément chauffant (6) présentant au moins deux ouvertures fonctionnelles (18, 19) pouvant être utilisées simultanément,
l'une des au moins deux ouvertures fonctionnelles étant réalisée sous forme de passage de matériau (18) et une autre des au moins deux ouvertures fonctionnelles étant réalisée sous forme de passage de rayonnement (19),
- avec plusieurs dispositifs d'entraînement (15,21) pour générer des mouvements relatifs dans la direction x et/ou y entre au moins deux des trois composants suivants : la plate-forme de construction (2), l'élément chauffant (6), l'au moins une source de rayonnement (7,14).

2. Dispositif (1) selon la revendication 1,
- avec un premier dispositif d'entraînement (15) pour générer un mouvement relatif entre la plate-forme de construction (2) et l'élément chauffant (6) dans la direction x et/ou y, et
- avec un deuxième dispositif d'entraînement (21) pour générer un mouvement relatif entre l'au moins une source de rayonnement (7, 14) et l'élément chauffant (6) dans la direction x et/ou y.

3. Dispositif (1) selon la revendication 1 ou 2, comprenant au moins deux sources de rayonnement (7, 14) pouvant fonctionner simultanément et une commande (21) pour commander ces sources de rayonnement (7, 14) de telle sorte que leurs zones de rayonnement (29, 30) se chevauchent.

4. Dispositif (1) selon l'une quelconque des revendications 1 à 3, dans lequel la forme, l'agencement et/ou la taille des ouvertures fonctionnelles (18, 19, 20) peuvent être modifiées.

5. Dispositif (1) selon l'une quelconque des revendications 1 à 4, dans lequel la vitesse de l'élément chauffant (6) et/ou la vitesse de l'au moins une source de rayonnement (7, 14) peuvent être modifiées pendant le processus de fabrication.

6. Procédé de fabrication d'objets tridimensionnels (3) par solidification sélective d'un matériau de construction (4) appliqué en couches,
- au moins un objet tridimensionnel (3) étant produit en couches sur une plate-forme de construction (2) disposée dans un plan x-y,
- un élément chauffant (6) recouvrant au moins en partie la plate-forme de construction (2) apportant de l'énergie thermique (11) dans le matériau de construction (4),
- au moins une source de rayonnement (7, 14) chauffant localement un matériau de construction (4) pour la solidification sélective,
- l'élément chauffant (6), en utilisant au moins deux ouvertures fonctionnelles (18, 19, 20), laissant passer simultanément du matériau de construction (4) et de l'énergie de rayonnement (8),
- plusieurs dispositifs d'entraînement (15,21) générant des mouvements relatifs dans la direction x et/ou y entre au moins deux des trois composants suivants : la plate-forme de construction (2), l'élément chauffant (6), l'au moins une source de rayonnment (7,14).
